# FASCICULE DE BREVET EUROPEEN

(11) **EP 3 593 012 B1**
(45) Date de publication et mention de la délivrance du brevet: **30.06.2021**
(21) Numéro de dépôt: 18707699.7
(22) Date de dépôt: 23.02.2018
(51) Int. Cl.: F16H 25/24, F16H 35/00, F02K 1/76

(54) **ACTIONNEUR EQUIPE D'UN SYSTEME DE NO BACK A ZONE D'INHIBITION**
AKTUATOR MIT EINEM NO-BACK-SYSTEM MIT INHIBITIONSBEREICH
ACTUATOR EQUIPPED WITH A NO BACK SYSTEM WITH INHIBITION ZONE

(30) Priorité: 06.03.2017 FR 1751773
(43) Date de publication de la demande: 15.01.2020
(73) Titulaire: Safran Electronics & Defense, 75015 Paris (FR)
(72) Inventeur: WERQUIN, Mickael, 92100 Boulogne-Billancourt (FR); HAUTECOEUR, Julien, 92100 Boulogne-Billancourt (FR); BASTIDE, Christophe, 92100 Boulogne-Billancourt (FR); OMNES, Pascal, 92100 Boulogne-Billancourt (FR)
(74) Mandataire: Prouvez, Julien
(86) Numéro de dépôt international: PCT/EP2018/054575
(87) Numéro de publication internationale: WO 2018/162260

(56) Documents cités:
- EP-A1- 3 078 589
- EP-A2- 0 960 811

## Description

### DOMAINE DE L'INVENTION

La présente invention concerne le domaine des actionneurs aéronautiques, et plus particulièrement les actionneurs d'inverseur de poussée des réacteurs et, plus particulièrement, des turboréacteurs.

### ARRIERE PLAN DE L'INVENTION

Dans un système classique d'inversion de poussée d'un turboréacteur équipant un aéronef, la nacelle du turboréacteur est pourvue de surfaces mobiles qui peuvent être déplacées entre une première position de sur-rétraction et une deuxième position de déploiement de façon à renvoyer vers l'avant une partie du flux de gaz produit par le turboréacteur, ces positions se situent de part et d'autre d'une troisième position de rétraction de la surface mobile. L'activation de l'inverseur de poussée permet notamment de réduire la distance d'atterrissage de l'aéronef. Le déploiement des surfaces mobiles soumet celles-ci, dès le début de leur ouverture, à d'importants efforts qui tendent à provoquer un passage rapide de la surface mobile depuis sa position de rétraction à sa position de déploiement.

Traditionnellement, les surfaces mobiles sont déplacées au moyen de vérins hydrauliques qui ont notamment l'avantage de freiner la charge à laquelle ils sont soumis.

Il a été envisagé d'équiper les inverseurs de poussée d'actionneurs électriques remplaçant les vérins hydrauliques. Un tel actionneur électrique comprend un bâti et une motorisation électrique pour entraîner en rotation une vis à billes. La vis à billes comprend une vis montée sur le bâti pour pivoter et un écrou engagé sur la vis. L'écrou est pourvu de moyens de liaison à la surface mobile et peut se déplacer depuis une première position de rétraction dans laquelle la surface mobile est refermée vers une deuxième position de déploiement dans laquelle la surface mobile dévie au moins une partie du flux du réacteur.

Dans une vis à billes, il y a si peu de frottements entre l'écrou et la vis qu'elle constitue un système réversible de transmission de mouvement : la rotation de la vis provoque un déplacement axial de l'écrou mais, a contrario, un effort axial sur l'écrou peut provoquer une rotation de la vis et un déplacement axial de l'écrou dans le sens de cet effort axial. Or, il est indispensable d'empêcher que la surface mobile puisse se déployer sous l'effet d'efforts qui seraient exercés directement sur celle-ci : en effet, un déploiement accidentel de la surface mobile pourrait avoir des conséquences catastrophiques pour la sécurité de l'avion. D'une manière générale, on cherche à maîtriser le déploiement de la surface mobile et notamment la vitesse de déploiement. A cet effet, l'actionneur peut intégrer un dispositif d'anti-extension (communément désigné « No Back ») qui freine la rotation de la vis lorsque la surface mobile exerce sur l'écrou un effort de traction tendant à le déplacer vers sa deuxième position de rétraction. Un tel dispositif est connu du document EP3078589. Une telle situation intervient en particulier lors de l'ouverture de la surface mobile pendant la phase d'atterrissage. Le vent apparent auquel est soumis le turboréacteur, auquel peuvent s'ajouter les efforts du flux du turboréacteur sur la surface mobile, exerce alors un important effort de traction sur la surface mobile dès le début de son ouverture.

Le dispositif d'anti-extension est agencé pour ne pas freiner la rotation de la vis lors du déplacement de l'écrou depuis sa deuxième position de déploiement vers sa troisième position de rétraction afin de ne pas requérir un surdimensionnement de la motorisation électrique.

Pour s'opposer au déploiement accidentel de la surface mobile, il est en outre prévu un dispositif principal de verrouillage (ou PLS de l'anglais « primary lock system ») comprenant des verrous montés sur la nacelle pour agripper la surface mobile dans sa position de rétraction. Généralement, les actionneurs de surface mobile adoptent leur première position dite de sur-rétraction après avoir parcouru une surcourse de rétraction depuis leur troisième position de rétraction. Lorsque l'écrou est dans sa première position de sur-rétraction dans laquelle il maintient la surface mobile au-delà de sa position de rétraction, la surface mobile comprime légèrement les joints de la nacelle coopérant avec la surface mobile, ce qui permet de désengager les verrous du dispositif principal de verrouillage pour autoriser le déploiement ultérieur de la surface mobile.

La surface mobile est dimensionnée en prenant comme hypothèse que, en vol, celle-ci est verrouillée par le dispositif principal de verrouillage dans sa position de rétraction. Les vibrations auxquelles est soumise la surface mobile en vol peuvent engendrer de brefs efforts qui tendent à amener la surface mobile vers sa position de sur-rétraction. La réversibilité de la vis à bille autorise un tel mouvement. Lorsque ces efforts disparaissent, il est important que la surface mobile soit libre de revenir à sa troisième position de rétraction pour laquelle la nacelle est dimensionnée. En effet, à défaut de retour à sa position de rétraction, la nacelle serait soumise à des efforts importants résultant de la combinaison de l'effort interne de maintien de la surface mobile en position de sur-rétraction ajoutés aux vibrations et provenant de sa liaison avec l'actionneur au lieu du verrou primaire. Le dimensionnement le plus favorable des portes et de la nacelle étant obtenu avec des efforts transitant par les verrous principaux et non par les actionneurs, il convient alors que l'actionneur laisse libre le retour de la nacelle depuis sa première position de sur-rétraction vers sa troisième position de rétraction.

Lors du passage de l'écrou depuis sa troisième position de sur-rétraction à sa première position de rétraction, le dispositif d'anti-extension freine la rotation de la vis et empêche l'écrou d'atteindre sa troisième position de rétraction. Ceci oblige alors à mettre en place un mécanisme de désengagement du dispositif d'anti-extension qui représente un risque pour la sécurité et requiert alors une instrumentation de contrôle supplémentaire.

Ces solutions augmentent le poids et l'encombrement de l'équipement, ce qui est un frein à l'utilisation d'actionneurs électrique pour l'inversion de poussée.

### OBJET DE L'INVENTION

Un but de l'invention est de réduire le poids et l'encombrement d'un actionneur électrique d'inverseur de poussée.

### RESUME DE L'INVENTION

A cet effet, on prévoit un actionneur comprenant un bâti, une vis montée à rotation sur le bâti ainsi qu'un écrou qui est pourvu de moyens de liaison à un élément à déplacer et qui est engagé sur la vis pour être déplacé, par la vis en rotation, entre une première position de sur-rétraction et une deuxième position de déploiement de part et d'autre d'une troisième position de rétraction séparée de la position de sur-rétraction par une distance correspondant à une rotation de la vis d'un premier secteur angulaire. L'actionneur comprend également un dispositif d'anti-extension comportant un disque de friction libre en rotation par rapport à la vis et destiné à freiner par frottement une partie solidaire en rotation de la vis lorsque l'élément à déplacer exerce sur l'écrou un effort de traction tendant à le déplacer vers la deuxième position de déploiement. Selon l'invention, le disque de friction comprend au moins une surface lisse et un obstacle ménagé dans la surface lisse pour tous deux collaborer avec au moins un cliquet lié au bâti et définir ainsi respectivement au moins un deuxième secteur angulaire de libre rotation du disque de friction dans un sens prédéterminé et une position de blocage du disque de friction dans ce sens prédéterminé. La surface lisse a une longueur telle que l'amplitude du premier secteur angulaire est strictement inférieure à l'amplitude du deuxième secteur angulaire.
Au sens de la présente demande, une surface du disque de friction est dite « lisse » quand elle est dépourvue d'obstacle susceptible d'interagir avec le cliquet pour bloquer la rotation du disque de friction.
Lors du passage de l'écrou depuis sa première position de sur-rétraction à sa troisième position de rétraction, le cliquet coopère avec la surface lisse et le mécanisme d'anti-extension est inactif (il ne s'oppose pas à la rotation de la vis dans ce sens). La surface mobile est donc libre de se déplacer entre sa position de sur-rétraction et sa position de rétraction. Ainsi, en vol, lorsque la surface mobile est soumise à un effort tendant à la faire passer depuis sa position de rétraction à sa position de sur-rétraction, la surface mobile retourne librement vers sa position de rétraction et la nacelle n'est soumise à aucun effort interne supplémentaire.
Dans un mécanisme anti-extension à friction classique, la position du disque de friction est indéterminée. Ainsi, la position angulaire relative de la surface lisse et du cliquet sont inconnues lorsque l'écrou est dans sa première position de sur-rétraction et il existe une possibilité que le cliquet vienne collaborer avec l'obstacle lors de son passage de la première position de sur-rétraction à la troisième position de rétraction. Le dispositif d'anti-extension peut alors bloquer alors la rotation de la vis et empêche l'écrou d'atteindre sa troisième position de rétraction. Il est donc nécessaire de synchroniser angulairement la position de l'obstacle avec la position de l'écrou lorsqu'il est dans sa troisième position de rétraction. La motorisation de l'actionneur est utilisée pour faire passer l'écrou depuis sa première position de sur-rétraction à sa troisième position de rétraction afin de fournir le couple nécessaire à amener l'écrou dans sa troisième position même si le dispositif d'anti-extension devient actif lors de cet déplacement. Il y a eu synchronisation de l'obstacle avec le cliquet. Le cliquet est alors libre de glisser sur la surface lisse du disque de friction sur une amplitude égale à celle du premier secteur angulaire lors d'un déplacement de l'écrou depuis sa troisième position de rétraction vers sa première position de sur-rétraction et de revenir à sa troisième position de rétraction. Le mécanisme d'anti-extension est donc inactif entre les positions de sur-rétraction et de rétraction, évitant qu'un blocage de l'écrou de l'actionneur entre sa première et sa troisième position puisse générer des contraintes non souhaitées sur la nacelle.
Un autre avantage de l'invention est que le faible nombre de pièces mis en œuvre améliore la fiabilité de l'actionneur.
La différence d'amplitude entre le premier et le deuxième secteur angulaire prend en compte les tolérances de fabrication de l'ensemble des éléments (nacelle, surface mobile, etc..) intervenant dans la chaîne cinématique ainsi que la valeur de la surcourse de rétraction. Il est à noter que au plus les amplitudes du premier et du deuxième secteur angulaires sont proches, au plus le nombre de cliquets et/ou d'obstacles peut être important.

La fabrication d'un tel actionneur est facilitée lorsque la partie solidaire en rotation de la vis comprend une douille montée à coulissement sur la vis. Un ensemble prêt à monter peut être réalisé lorsque la douille comprend une portion droite s'étendant coaxialement à l'axe de rotation de la vis et que le disque de friction est monté coulissant sur la portion droite de la douille.

Avantageusement, le dispositif d'anti-extension comprend un premier disque de butée pourvu de rouleaux dont les axes de rotation s'étendent radialement, le premier disque de butée étant monté libre en rotation autour de la vis.

Le freinage du dispositif anti-extension est amélioré lorsque le dispositif d'anti-extension comprend un disque à rouleaux biais monté libre en rotation autour de la vis et pourvu de rouleaux dont l'axe de rotation s'étend selon une direction formant un angle non nul avec une direction radiale passant par une des extrémités du rouleau, le disque à rouleaux biais s'étendant entre le disque de friction et la partie solidaire en rotation de la vis.

La fabrication d'un tel actionneur est simplifiée lorsque la surface lisse est située en périphérie du disque de friction.

Lorsque la distance séparant la position de rétraction de la position de sur-rétraction est inférieure à la moitié du pas de la vis, il est préférable que le disque de friction collabore avec deux cliquets. Le nombre de cliquets pouvant être installé peut atteindre le premier entier inférieur au rapport du pas de vis à la distance entre la position de sur-rétraction et la position de rétraction.

L'invention concerne également un inverseur de poussée comprenant un actionneur d'un des types ci-dessus.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux figures annexées parmi lesquelles :
- la figure 1 est une vue schématique en perspective d'une nacelle pourvue d'un actionneur selon l'invention ;
- la figure 2 est une vue schématique en perspective d'un actionneur selon l'invention ;
- la figure 3 est une vue schématique en coupe de l'actionneur selon l'invention en position de sur-rétraction ;
- la figures 4 est une vue schématique en coupe de l'actionneur selon l'invention en position de rétraction ;
- la figures 5 est une vue schématique en coupe de l'actionneur selon l'invention en position de déploiement ;
- la figure 6 est une vue partielle de détail en coupe de l'actionneur selon l'invention;
- la figure 7 est une vue schématique partielle en coupe de l'actionneur selon l'invention ;
- la figure 8 est une vue schématique partielle éclatée du dispositif d'anti-extension de l'actionneur selon l'invention ;
- les figures 9 à 13 sont des vues schématiques d'un disque de friction de l'actionneur selon l'invention dans diverses configurations.

### DESCRIPTION DETAILLEE DE L'INVENTION

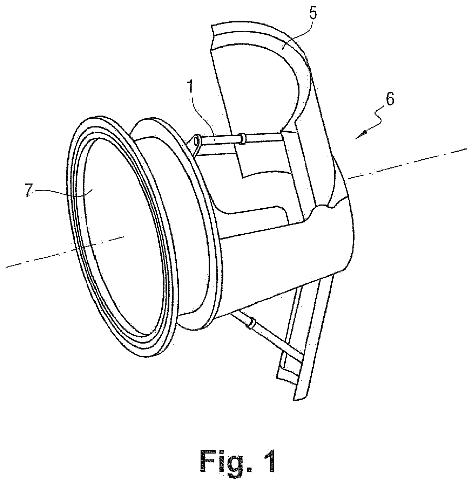

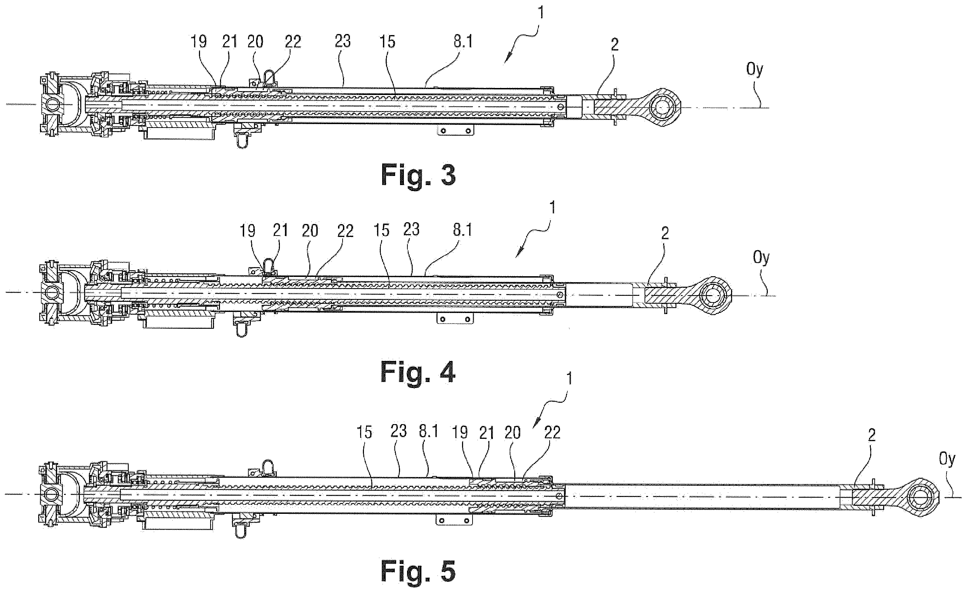

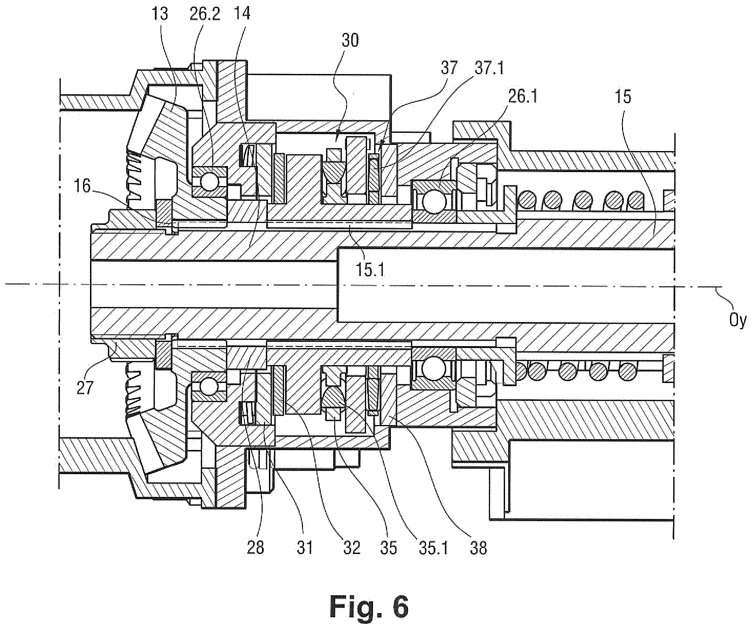

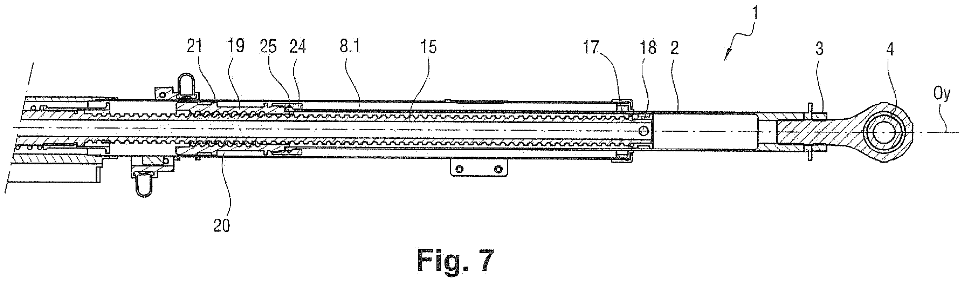

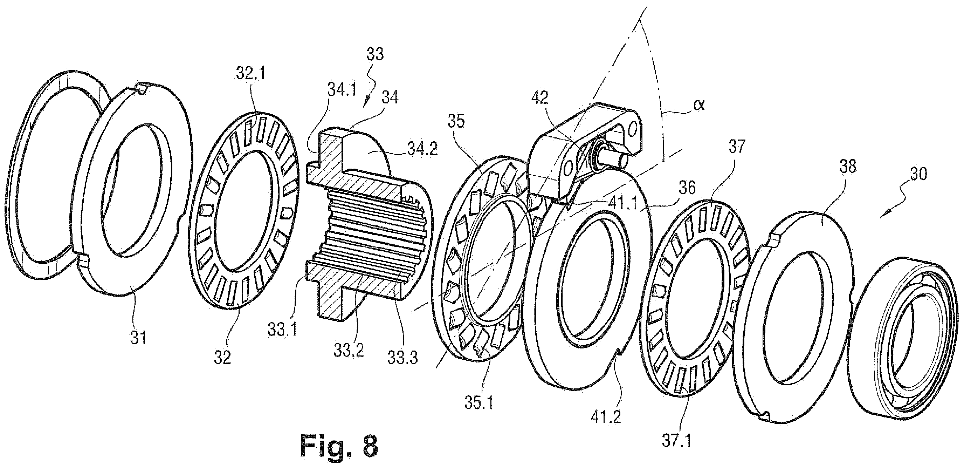

En référence aux figures 1 à 13, l'actionneur électromécanique de l'invention, généralement désigné 1, comprend un tube d'extension 2 dont une première extrémité 3 comporte une chape 4 rotulée reliée à une surface mobile 5 d'un inverseur de poussée 6 d'une nacelle 7. Le bâti 8 de l'actionneur 1 comprend un cardan 9 d'articulation de l'actionneur 1 à la nacelle 7 de turboréacteur et un fourreau 8.1 dans lequel le tube d'extension 2 coulisse entre une première position de sur-rétraction (représentée en figure 3) et une deuxième position de déploiement (représentée en figure 5). La figure 4 représente une troisième position de rétraction située entre la première position de sur-rétraction de la figure 3 et la deuxième position de déploiement de la figure 5. La deuxième position de déploiement correspond à une position de déploiement complet de la surface mobile 5 qui est alors en contact avec une butée de déploiement. La troisième position de rétraction correspond à une position de fermeture de la surface mobile 5 dans laquelle ladite surface mobile 5 est en appui sur les joints d'étanchéité s'étendant entre la surface mobile 5 et la nacelle et a sa surface externe affleurant la surface externe de la nacelle. Dans cette position la surface mobile 5 est en appui sur le dispositif de verrouillage primaire.

La première position de sur-rétraction correspond à une position dans laquelle la surface mobile 5 est un peu enfoncée dans son logement et écrase les joints d'étanchéité s'étendant entre la surface mobile 5 et la nacelle 7 qui est alors en contact avec une butée de sur-rétraction.

L'actionneur 1 est relié à un moteur 10 via une bride 11 d'accouplement solidaire d'un pignon conique 12 engrenant avec une roue dentée 13 conique. Une première extrémité 14 cannelée d'une vis 15 tubulaire à billes est montée dans un alésage 16 central rainuré de la roue dentée 13. La vis 15 s'étend selon un axe longitudinal Oy et possède une deuxième extrémité 17 pourvue d'une bague 18 coopérant avec l'intérieur du tube d'extension 2 pour en guider le coulissement selon l'axe longitudinal Oy. Un écrou 19 à billes est engagé sur la vis 15. Une première rainure 20 réalisée dans la face extérieure 21 de l'écrou 19 reçoit une clavette 22 en bronze qui coopère avec une deuxième rainure 23 du fourreau 8.1 bloquant ainsi la rotation de l'écrou 19 relativement à la vis 15. L'écrou 19 est également relié par un écrou fileté 24 de liaison à une deuxième extrémité 25 du tube d'extension 2.

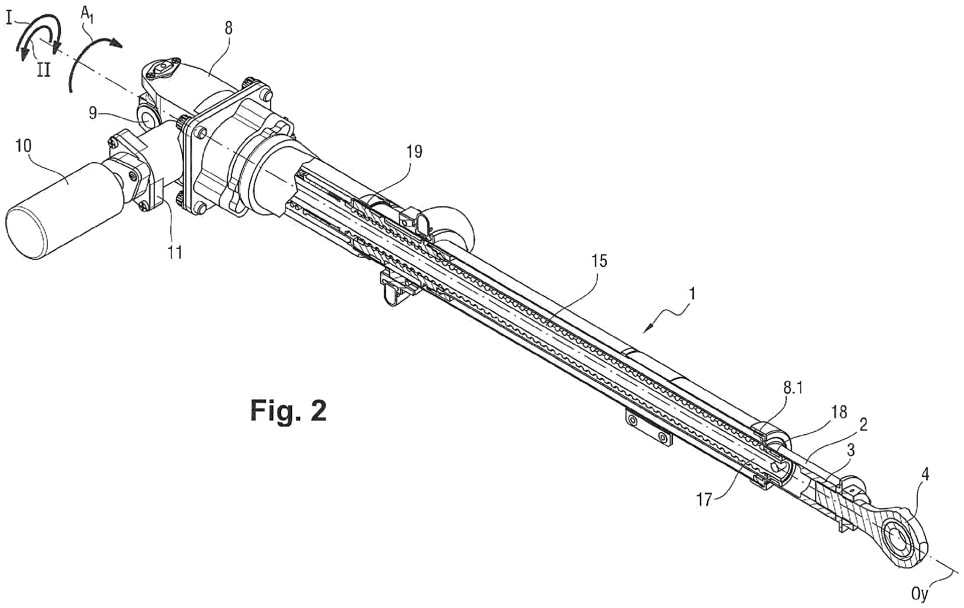

La vis 15 est montée à rotation dans des paliers 26.1 et 2.2 solidaires du bâti 8. Ainsi, la rotation de la vis 15 dans un premier sens (représenté par la flèche I sur la figure 2) permet de déplacer l'écrou 19 sur la vis 15 entre une première position de sur-rétraction de l'écrou 19 et une deuxième position de déploiement de l'écrou 19 de part et d'autre d'une troisième position de rétraction de l'écrou 19. Les première, deuxième et troisième positions de l'écrou correspondent respectivement à la première position de sur-rétraction du tube d'extension 2 (représentée en figure 3), la deuxième position de déploiement du tube d'extension 2 (représentée en figure 4) et la troisième position de rétraction du tube d'extension 2 (représentée en figure 5). La distance séparant la première position de sur-rétraction de l'écrou 19 et la troisième position de rétraction de l'écrou 19 correspond à une rotation de la vis 15 d'un premier secteur angulaire A₁ de 160 degrés.

L'actionneur 1 comprend également un dispositif d'anti-extension 30 comportant une première surface d'appui 31 solidaire du bâti 8 et qui fait face à un premier disque de butée 32 pourvu de rouleaux 32.1 dont les axes de rotation s'étendent radialement (c'est-à-dire perpendiculairement à l'axe longitudinal Oy). Le premier disque de butée 32 est monté libre en rotation autour d'une portion droite 33.1 d'une douille 33 montée sur la vis 15. L'alésage intérieur 33.2 de la douille 33 comporte des cannelures 33.3 qui coopèrent avec des rainures 15.1 de la vis 15, solidarisant ainsi en rotation la douille 33 et la vis 15. Un écrou 27 engagé sur l'extrémité 14 de la vis 15 serre la roue dentée 13 contre une entretoise 28 qui serre elle-même la douille 33 contre le palier 26 autorisant ainsi la transmission des efforts suivant l'axe longitudinal entre la douille 33 et la vis 15.

La douille 33 comprend une portion annulaire 34 s'étendant dans un plan perpendiculaire à l'axe longitudinal Oy. La portion annulaire 34 comprend une première face 34.1 s'étendant face au premier disque de butée 32 et une deuxième face 34.2 s'étendant face à un disque à rouleaux biais 35. Le disque à rouleaux biais 35 est monté libre en rotation autour de la vis 15. Plus spécifiquement, le disque à rouleaux biais 35 est monté à rotation autour de la portion droite 33.1 de la douille 33. Le disque à rouleaux biais 35 est pourvu de rouleaux 35.1 dont l'axe de rotation s'étend selon une direction formant un angle α non nul avec une direction radiale passant par une des extrémités de chaque rouleau 35.1. Un disque de friction 36 est monté libre en rotation autour de la portion droite 33.1 de la douille 33 et est interposé entre le disque à rouleaux biais 35 et un deuxième disque de butée 37. Le deuxième disque de butée 37 est monté libre en rotation autour de la portion droite 33.1 de la douille 33 et est pourvu de rouleaux 37.1 dont les axes de rotation s'étendent radialement. Une deuxième surface d'appui 38, ici sous la forme d'un disque, est solidaire du bâti 8 et s'étend face au deuxième disque de butée 37.

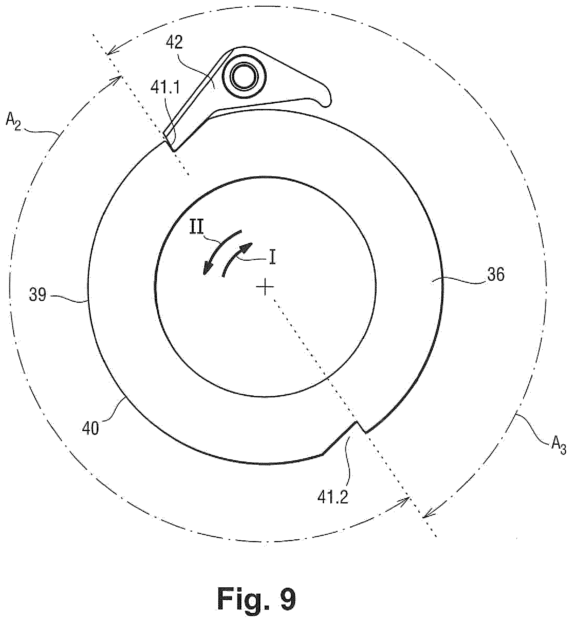

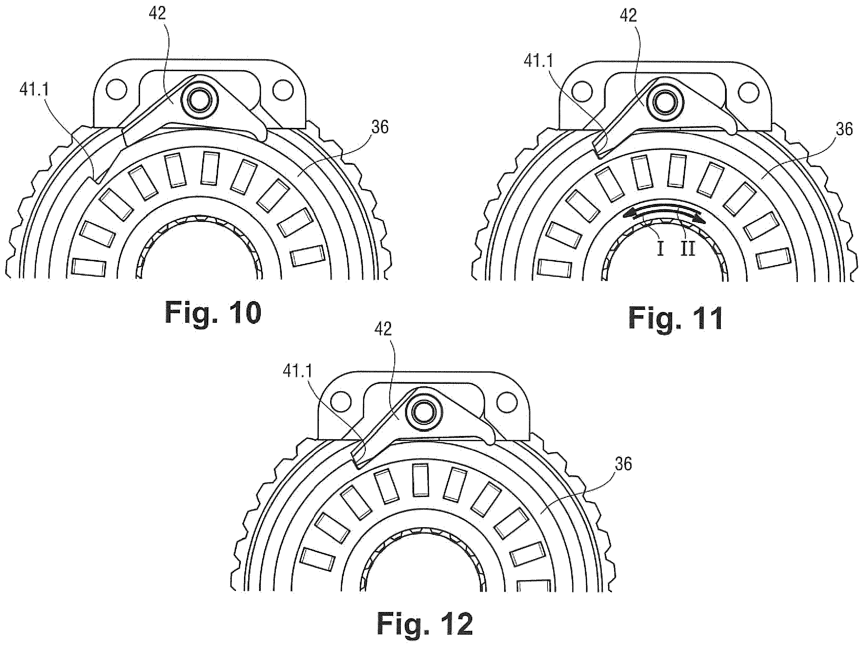

Comme visible en figure 9, le disque de friction 36 comprend, sur sa périphérie 39, une surface lisse 40 dans laquelle est ménagée une première encoche 41.1 et un deuxième encoche 41.2. Un cliquet 42 monté à rotation sur le bâti 8 collabore alternativement avec la surface lisse 40 (figure 10), l'encoche 41.1 (figure 11) et l'encoche 41.2. La surface lisse 40 et les première et deuxième encoches 41.1 et 41.2 définissent respectivement un deuxième et un troisième secteur angulaire A₂ et A₃ de 180 degrés de libre rotation du disque de friction 36 dans le premier sens I (et un deuxième sens II opposé au premier sens de rotation I) et une position de blocage du disque de friction 36 dans le premier sens I (figure 11).

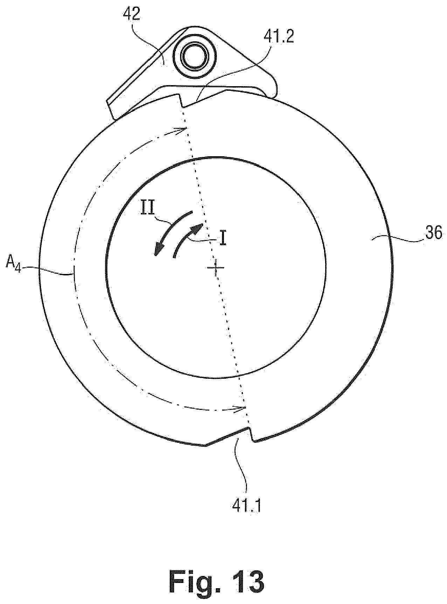

La longueur de la surface lisse 40 est alors telle que le premier secteur angulaire A₁ de 160 degrés est inférieur à celui des deuxièmes et troisième secteurs angulaires A₂ et A₃ de 180 degrés. En fonctionnement, l'écrou 19 (et donc la surface mobile 5) est initialement dans sa troisième position de rétraction représentée en figure 4 et le cliquet 42 collabore avec l'encoche 41 (figure 11). Pour déployer la surface mobile 5, on commande le moteur 10 pour qu' il imprime à la vis 15 une rotation, selon le deuxième sens de rotation II, d'une amplitude égale au premier secteur angulaire A₁=160 degrés. Le cliquet 42 laisse libre la rotation du disque de friction 36 autour de la vis 15 et aucun effort de freinage n'est appliqué. L'écrou 19 est amené depuis sa troisième position de rétraction vers sa première position de sur-rétraction (représentée en figure 3) et le cliquet 42 ainsi que la deuxième encoche 41.2 adoptent des positions relatives représentée en figure 13. Les joints de la surface mobile 5 sont comprimés au maximum et exercent un effort de traction sur l'écrou 19 qui s'ajoutent aux efforts de traction résultant du vent apparent et du flux du turboréacteur 7 et donc sur la vis 15, serrant la deuxième face 34.2 de la portion annulaire 34, le disque à rouleaux biais 35, le disque de friction 36, le deuxième disque de butée 37 contre la deuxième surface d'appui 38. On commande alors le désengagement des verrous du dispositif principal de verrouillage de la surface mobile 5. Une fois ces verrous désengagés, on commande le moteur 10 pour qu'il imprime à la vis 15 une rotation, selon le premier sens de rotation I. Au cours de cette rotation, le disque de friction 36 parcourt un quatrième secteur angulaire A₄ (ici au maximum de 160 degrés) au cours duquel le cliquet 42 collabore avec la surface lisse 40. Le disque de friction 36 est libre en rotation et le dispositif d'anti-extension 30 n'est pas actif. Aucun freinage du mouvement ne se produit. La première encoche 41.1 peut arriver ensuite devant le cliquet 42 qui s'engage dans l'encoche 41 et bloque la rotation du disque de friction 36 selon le premier sens de rotation I. Les efforts exercés par le vent apparent et le flux du turboréacteur 7 sur la surface mobile 5 engendrent toujours un effort de traction sur l'écrou 9 et le dispositif d'anti-extension 30 freine la rotation de la vis 15. Le moteur 10 poursuit la rotation de la vis 15 selon le premier sens I jusqu'à ce que l'écrou 19 atteigne sa troisième position de rétraction. A ce stade, le cliquet 42 est déjà engagé dans la première encoche 41.1 et le dispositif d'anti-extension 30 est actif. Le moteur 10 poursuit la mise en rotation de la vis 5 dans le sens I et l'écrou 19 est soumis à un effort de traction provoqué par le vent apparent et le flux du turboréacteur 7 auquel la surface mobile 5 est soumise. Le dispositif d'anti-extension 30 freine ce mouvement par frottement provoqué par la compression, par la portion annulaire 34 de la douille 33, du disque à rouleaux biais 35 sur le disque de friction 36 et le deuxième disque de butée 37 contre la surface d'appui 38. Le moteur 10 ne doit alors fournir à la vis 15 que le couple nécessaire pour surmonter la différence entre le couple provoqué par le vent apparent sur la surface mobile 5 et qui tend à déplacer l'écrou vers sa deuxième position de déploiement et le couple de freinage appliqué par le dispositif d'anti-extension 30 sur la douille 33.

Lors du passage de l'écrou 19 de sa deuxième position de déploiement à sa première position de sur-rétraction, le cliquet 42 laisse libre la rotation du disque de friction 36 selon le deuxième sens II de rotation. Le passage de l'écrou 19 depuis sa première position de sur-rétraction à sa troisième position de rétraction se déroule de manière identique à celle décrite ci-dessus.

Bien entendu l'invention n'est pas limitée aux modes de réalisation décrits mais englobe toute variante entrant dans le champ d'application de l'invention telle que définie par les revendications.

En particulier :
- bien qu'ici, un unique cliquet ait été décrit, l'invention s'applique également à un actionneur comprenant un second cliquet pour coopérer avec la deuxième encoche. L'invention s'applique également à un unique ensemble encoche/cliquet ou à plus de deux encoches et/ou cliquets ;
- bien qu'ici l'actionneur comprenne un tube d'extension muni d''une chape rotulée, l'invention s'applique également à d'autres moyens de liaison à un élément à déplacer comme par exemple une bielle reliée par un oeillet ou un pivot ;
- bien qu'ici l'actionneur soit relié au moteur à l'aide d'une bride, l'inventions s'applique également à d'autres moyens d'accouplement d'un moteur à l'actionneur comme par exemple une douille cannelée, un joint Oldham, une rotule, un disque d'embrayage ; un arbre flexible de transmission.
- bien qu'ici la bride d'accouplement soit reliée à un pignon conique, l'invention s'applique également à d'autres moyens de liaison à la vis comme par exemple un pignon droit, une courroie crantée ou lisse ;
- bien qu'ici le premier secteur angulaire soit égal à 89 % du deuxième et troisième secteur angulaire, l'invention s'applique également à d'autres rapports minimaux entre le premier et le deuxième secteur angulaire ;
- bien qu'ici le dispositif anti-extension comprenne un premier et deuxième disque de butée à rouleaux ainsi qu'un disque à rouleaux biais, l'invention s'applique également à d'autres configurations de dispositifs anti-extension comme par exemple un dispositif anti-extension dépourvu de disque de butée à rouleaux et/ou de disque à rouleaux biais, ou comprenant d'autres disques supplémentaires, ou encore plusieurs disques de friction ;
- bien qu'ici le cliquet coopère avec des encoches, l'invention s'applique également à d'autres types d'obstacles comme par exemples des dents en saillie de la périphérie du disque ;
- bien qu'ici la douille comprenne une portion annulaire, l'invention s'applique également à d'autres types de partie de la vis solidaire en rotation comme par exemple une portion annulaire directement usinée ou rapportée sur la vis ;
- bien qu'ici le disque de friction soit monté libre en rotation autour de la portion droite de la douille, l'invention s'applique également à d'autres manière de monter le disque libre en rotation autour de la vis comme par exemple un montage directement au contact de la vis, ou sur roulement ;
- bien qu'ici la vis soit une vis à bille à pas à droite, l'invention s'applique également à d'autres types de vis comme par exemple une vis à rouleaux ou une vis à pas à gauche ;
- bien qu'ici l'écrou comprenne une clavette qui coopère avec le fourreau, l'invention s'applique également à d'autres moyens d'anti-rotation, comme par exemple des douilles à billes ou un blocage en anti-rotation réalisé par la jonction entre le tube d'extension et la nacelle.

## Revendications

1. Actionneur (1) comprenant :
- un bâti (8);
- une vis (15) montée à rotation sur le bâti (8);
- un écrou (19) qui est pourvu de moyens de liaison (2) à un élément à déplacer (5) et qui est engagé sur la vis (15) pour être déplacé, par la vis (15) en rotation, entre une premiere position de sur-rétraction et une deuxième position de déploiement de part et d'autre d'une troisième position de rétraction séparée de la position de sur-rétraction par une distance correspondant à une rotation de la vis (15) d'un premier secteur angulaire (A₁) ;
- un dispositif d'anti-extension (30) comportant un disque de friction (36) libre en rotation par rapport à la vis (15) et destiné à freiner par frottement une partie (34) solidaire en rotation de la vis (15) lorsque l'élément à déplacer (5) exerce sur l'écrou (19) un effort de traction tendant a le déplacer vers la deuxième position de déploiement;
**caractérisé en ce que** le disque de friction (36) comprend au moins une surface lisse (40) et un obstacle (41.1 , 41.2) ménagé dans la surface lisse (40) pour tous deux collaborer avec au moins un cliquet (42) lié au bâti (8) et définir ainsi respectivement au moins un deuxième secteur angulaire (A₂, A₃) de libre rotation du disque de friction (36) dans un sens prédéterminé (I) et une position de blocage du disque de friction (36) dans ce sens prédéterminé (I), la surface lisse (40) ayant une longueur telle que l'amplitude du premier secteur angulaire (A₁) soit strictement inférieure à l'amplitude du deuxième secteur angulaire (A₂, A₃).

2. Actionneur (1) selon la revendication 1, dans lequel la partie (34) solidaire en rotation de la vis (15) comprend une douille (33) montée à coulissement sur la vis (15).

3. Actionneur (1) selon la revendication 2, dans lequel la douille (33) comprend une portion droite (33.1) s'étendant coaxialement à l'axe de rotation la vis (15) et le disque de friction (36) est monté coulissant sur la portion droite (33.1) de la douille (33).

4. Actionneur (1) selon l'une des revendications précédentes, dans lequel le dispositif d'anti-extension (30) comprend un premier disque de butée (32) pourvu de rouleaux (32.1) dont les axes de rotation s'étendent radialement, le premier disque de butée (32) étant monté libre en rotation autour de la vis (15).

5. Actionneur (1) selon l'une des revendications précédentes, dans lequel le dispositif d'anti-extension (30) comprend un disque à rouleaux biais (35) monté libre en rotation autour de la vis (15) et pourvu de rouleaux (35.1) dont l'axe de rotation s'étend selon une direction formant un angle (α) non nul avec une direction radiale passant par une des extrémités du rouleau (35.1), le disque à rouleaux biais (35) s'étendant entre le disque de friction (36) et la partie (34) solidaire en rotation de la vis.

6. Actionneur (1) selon l'une des revendications précédentes, dans lequel le dispositif d'anti-extension (30) comprend un deuxième disque de butée (37) pourvu de rouleaux (37.1) dont les axes de rotation s'étendent radialement et monté libre en rotation autour de la vis (15) .

7. Actionneur (1) selon l'une des revendications précédentes, dans lequel la surface lisse (40) est située en périphérie du disque de friction (36).

8. Actionneur (1) selon l'une des revendications précédentes, dans lequel le disque de friction (36) collabore avec deux cliquets (42).

9. Inverseur de poussée (6) comprenant un actionneur (1) selon l'une quelconque des revendications précédentes.

## Patentansprüche

1. Aktor (1), umfassend:
- ein Tragelement (8);
- eine Schraube (15), die drehbar an dem Tragelement (8) gelagert ist;
- eine Mutter (19), die mit Verbindungsmitteln (2) zur Verbindung mit einem zu verschiebenden Element (5) verbunden ist und die auf der Schraube (15) in Eingriff steht, um durch die sich drehende Schraube (15) zwischen einer übereingefahrenen ersten Stellung und einer ausgefahrenen zweiten Stellung zu beiden Seiten einer eingefahrenen dritten Stellung verschoben zu werden, die von der übereingefahrenen Stellung um einen Abstand beabstandet ist, der einer Drehung der Schraube (15) um einen ersten Winkelsektor (A₁) entspricht;
- eine Anti-Ausfahrvorrichtung (30), die eine Reibscheibe (36) umfasst, die in Bezug auf die Schraube (15) frei drehbar und dazu bestimmt ist, durch Reibung einen drehfest mit der Schraube (15) verbundenen Teil (34) zu bremsen, wenn das zu verschiebende Element (5) auf die Mutter (19) eine Zugkraft ausübt, die dazu neigt, sie in Richtung der ausgefahrenen zweiten Stellung zu verschieben;
**dadurch gekennzeichnet, dass** die Reibscheibe (36) mindestens eine glatte Oberfläche (40) und ein Hindernis (41.1, 41.2) umfasst, das in der glatten Oberfläche (40) ausgebildet ist, damit alle beide mit mindestens einer mit dem Tragelement (8) verbundenen Sperrklinke (42) zusammenwirken und so mindestens einen zweiten Winkelsektor (A₂, A₃) einer freien Drehung der Reibscheibe (36) in eine vorbestimmte Richtung (I) bzw. eine Blockierposition zum Blockieren der Reibscheibe (36) in dieser vorbestimmten Richtung (I) definieren, wobei die glatte Oberfläche (40) eine derartige Länge hat, dass die Amplitude des ersten Winkelsektors (A₁) strikt kleiner als die Amplitude des zweiten Winkelsektors (A₂, A₃) ist.

2. Aktor (1) nach Anspruch 1, bei dem der drehfest mit der Schraube (15) verbundene Teil (34) eine Hülse (33) umfasst, die verschiebbar auf der Schraube (15) gelagert ist.

3. Aktor (1) nach Anspruch 2, bei dem die Hülse (33) einen geraden Abschnitt (33.1) umfasst, der sich koaxial zur Rotationsachse der Schraube (15) erstreckt und die Reibscheibe (36) verschiebbar auf dem geraden Abschnitt (33.1) der Hülse (33) gelagert ist.

4. Aktor (1) nach einem der vorhergehenden Ansprüche, bei dem die Anti-Ausfahrvorrichtung (30) eine erste Anschlagsscheibe (32) umfasst, die mit Rollen (32.1) versehen ist, deren Rotationsachsen sich radial erstrecken, wobei die erste Anschlagscheibe (32) frei drehbar um die Schraube (15) gelagert ist.

5. Aktor (1) nach einem der vorhergehenden Ansprüche, bei dem die Anti-Ausfahrvorrichtung (30) eine Schrägrollenscheibe (35) umfasst, die frei drehbar um die Schraube (15) gelagert und mit Rollen (35.1) versehen ist, deren Rotationsachse sich in einer Richtung erstreckt, die einen Winkel (α) von ungleich Null mit einer radialen Richtung bildet, die durch eines der Enden der Rolle (35.1) hindurchgeht, wobei sich die Schrägrollenscheibe (35) zwischen der Reibscheibe (36) und dem drehfest mit der Schraube verbundenen Teil (34) erstreckt.

6. Aktor (1) nach einem der vorhergehenden Ansprüche, bei dem die Anti-Ausfahrvorrichtung (30) eine zweite Anschlagscheibe (37) umfasst, die mit Rollen (37.1) versehen ist, deren Rotationsachsen sich radial erstrecken, und die frei in Drehung um die Schraube (15) gelagert ist.

7. Aktor (1) nach einem der vorhergehenden Ansprüche, bei dem sich die glatte Oberfläche (40) am Umfang der Reibscheibe (36) befindet.

8. Aktor (1) nach einem der vorhergehenden Ansprüche, bei dem die Reibscheibe (36) mit zwei Sperrklinken (42) zusammenwirkt.

9. Schubumkehrer (6), umfassend einen Aktor (1) nach einem der vorhergehenden Ansprüche.

## Claims

1. An actuator (1) comprising:
- a body (8);
- a screw (15) that is rotatably mounted on the body (8) ;
- a nut (19) that is provided with connection means (2) for connecting it to an element (5) for moving, and that is engaged on the screw (15) to be moved by the screw (15) rotating between an over-retracted first position and a deployed second position on either side of a retracted third position that is spaced apart from the over-retracted position by a distance corresponding to the screw (15) rotating through a first angular sector (A₁); and
- an anti-extension device (30) comprising a friction disk (36) free to rotate relative to the screw (15) and designed to use friction to brake a portion (34) constrained to rotate with the screw (15) when the element (5) for moving exerts a traction force on the nut (19) tending to move the nut towards the deployed second position;
the actuator being **characterized in that** the friction disk (36) has at least one smooth surface (40) and an obstacle (41.1, 41.2) arranged in the smooth surface (40) both for co-operating with at least one pawl (42) connected to the body (8), thereby defining both at least one second angular sector (A₂, A₃) of free rotation for the friction disk (36) in a predetermined direction (I) and also a position for blocking the friction disk (36) in this predetermined direction (I), the smooth surface (40) having a length such that the amplitude of the first angular sector (A₁) is strictly less than the amplitude of the second angular sector (A₂, A₃).

2. An actuator (1) according to claim 1, wherein the portion (34) constrained to rotate with the screw (15) comprises a bushing (33) slidably mounted on the screw (15) .

3. An actuator (1) according to claim 2, wherein the bushing (33) includes a straight portion (33.1) extending coaxially about the axis of rotation of the screw (15), and the friction disk (36) is slidably mounted on the straight portion (33.1) of the bushing (33).

4. An actuator (1) according to any preceding claim, wherein the anti-extension device (30) comprises a first abutment disk (32) provided with rollers (32.1) having respective axes of rotation that extend radially, the first abutment disk (32) being mounted free to rotate about the screw (15).

5. An actuator (1) according to any preceding claim, wherein the anti-extension device (30) comprises a skew roller disk (35) mounted free to rotate about the screw (15) and provided with rollers (35.1) having respective axes of rotation that extend in directions that form a non-zero angle (α) with a radial direction passing through one of the ends of the roller (35.1), the skew roller disk (35) extending between the friction disk (36) and the portion (34) constrained to rotate with the screw.

6. An actuator (1) according to any preceding claim, wherein the anti-extension device (30) comprises a second abutment disk (37) provided with rollers (37.1) having respective axes of rotation that extend radially, the second disk being mounted to rotate freely about the screw (15).

7. An actuator (1) according to any preceding claim, wherein the smooth surface (40) is situated at the periphery of the friction disk (36).

8. An actuator (1) according to any preceding claim, wherein the friction disk (36) co-operates with two pawls (42) .

9. A thrust reverser (6) comprising an actuator (1) according to any preceding claim.
